**Europäisches Patentamt**

**European Patent Office**

**Office européen des brevets**

(19)

(11) Veröffentlichungsnummer: **0 009 695**
**B1**

(12) # EUROPÄISCHE PATENTSCHRIFT

(45) Veröffentlichungstag der Patentschrift:
**16.06.82**

(51) Int. Cl.³: **C 08 F 251/00**

(21) Anmeldenummer: **79103463.0**

(22) Anmeldetag: **17.09.79**

(54) **Pfropfcopolymerisate von Polysaccharidestern, ein Verfahren zu ihrer Herstellung und ihre Verwendung zur Herstellung von Folien.**

(30) Priorität: **29.09.78 DE 2842540**

(43) Veröffentlichungstag der Anmeldung:
**16.04.80 Patentblatt 80/8**

(45) Bekanntmachung des Hinweises auf die Patenterteilung:
**16.06.82 Patentblatt 82/24**

(84) Benannte Vertragsstaaten:
**AT DE FR GB IT**

(56) Entgegenhaltungen:
**FR-A-1 177 730**
**FR-A-1 224 368**
**GB-A- 860 244**
**US-A-3 704 271**

(73) Patentinhaber: **BAYER AG, Zentralbereich Patente, Marken und Lizenzen, D-5090 Leverkusen 1, Bayerwerk (DE)**

(72) Erfinder: **Bartl, Herbert, Dr., Eichendorffweg 10, D-5068 Odenthal (DE)**
Erfinder: **Mietzsch, Fritz, Dr., Isidor-Caro-Strasse 58, D-5000 Köln 80 (DE)**

## Pfropfpolymerisate von Polysaccharidestern, ein Verfahren zu ihrer Herstellung und ihre Verwendung zur Herstellung von Folien

Die vorliegende Anmeldung betrifft Pfropfpolymerisate von Ethylen und Vinylacetat sowie ggf. weiteren Comonomeren auf Polysaccharidester wie z.B. Cellulosepropionat und deren Verwendung zur Herstellung von Folien.

Es ist bekannt, dass man aus Copolymeren des Ethylens mit Vinylacetat oder Acrylsäureestern Formkörper, insbesondere Folien für Verpackungszwecke, mit grosser Flexibilität herstellen kann. Von Nachteil ist, dass solche Folien, insbesondere dann, wenn der Anteil an Vinylestern und Acrylestern mehr als 10 Gew.% der einpolymerisierten Monomeren im Copolymeren beträgt, zum Blocken neigen. Besonders wünschenswert wäre es, Copolymere, z.B. aus Ethylen-Vinylacetat zu verwenden, da daraus hergestellte Folien kautschukartige Elastizität aufweisen. Die Klebrigkeit solcher Folien ist jedoch besonders stark, so dass diese Produkte für die praktische Herstellung von Folien für Verpackungszwecke nicht in Frage kommen.

Aus der DOS 2529 547 ist es bekannt, u.a. monomere Ester wie Acrylester und Vinylacetat in Gegenwart von Polymeren wie z.B. Nitrocellulose oder Celluloseacetobutyrat in wässriger Emulsion zu polymerisieren. Nach diesem Verfahren werden Mischungen der entsprechenden Polymeren in wässriger Emulsion erhalten, die als Kleber oder zur Herstellung von Überzügen verwendet werden können.

Aus GB-PS-860 244 ist bekannt, dass man durch Einwirkung von energiereicher Strahlung Pfropfpolymerisate von Vinylacetaten auf Celluloseester erhalten kann. Man kann daher Trichlorethylen als Kettenüberträger einsetzen. Üblicherweise nimmt Trichlorethylen an der Polymerisation nicht teil.

Es wurde nun gefunden, dass Pfropfcopolymerisate von Ethylen und Vinylacetat, gegebenenfalls unter Mitverwendung weiterer Comonomerer, auf Polysaccharideester flexible Produkte darstellen, die neben anderen vorteilhaften Eigenschaften eine verminderte Klebrigkeit aufweisen. Die Pfropfcopolymerisate können überraschenderweise mit hohen Pfropfungsgraden in Bezug auf die Polysaccharidester erhalten werden, wenn man die linearen Polysaccharidester in Vinylacetat, ggf. unter Mitverwendung anderer Vinlyverbindungen oder eines Lösungsmittels vorzugsweise tert. Butanol, auflöst und nach Zusatz von Ethylen unter erhöhtem Druck mit Hilfe radikalbildender Initiatoren polymerisiert.

Gegenstand der Erfindung sind Pfropfcopolymerisate aus

A) einem Polysaccharidester als Pfropfgrundlage und

B) einem aufgepfropften Monomerengemisch aus Vinylacetat und weiteren Monomeren, die dadurch gekennzeichnet sind, dass die Pfropfpolymerisate aufgebaut sind aus

A) 2–3 Gew.% Pfropfgrundlage und

B) 70–98 Gew.% aufgepfropftem Monomerengemisch aus

1) 8–90 Gew.–% Ethylen und

2) 10–92 Gew.–% Vinylacetat

wobei sich die Summen von A und B bzw. 1 und 2 jeweils zu 100% ergänzen.

Als Pfropfgrundlage geeignet sind die Ester linearer Polysaccharide; insbesondere solche der Cellulose, der Amylose und des Pullulans. Vorzugsweise verwendet man Ester dieser Polysaccharide mit aliphatischen Carbonsäuren mit 2–4 C-Atomen wie Essigsäure, Propionsäure und Buttersäure oder Gemischen dieser Säuren. Daneben kommen auch Polysaccharidnitrate wie z.B. Cellulosenitrate infrage. Es ist jedoch bevorzugt, die vorerwähnten Carbonsäureester der Cellulose zu verwenden, insbesondere Celluloseacetopropionate und Celluloseacetobutyrate, da sie zu Pfropfprodukten führen, die eine besonders gute Transparenz, gepaart mit anderen guten physikalischen Eigenschaften besitzen.

Die Verfahren zur Herstellung von organischen Celluloseestern sind seit langem bekannt und werden beispielsweise in Ullmanns Encyklopädie der technischen Chemie (Verlag Urban & Schwarzenberg, München-Berlin, 1963) im 5. Band auf den Seiten 182 bis 201 beschrieben.

Bevorzugte Celluloseacetobutyrate enthalten

40 bis 50 Gew.-% Buttersäure- und

15 bis 26 Gew.-% Essigsäuregruppen.

Besonders bevorzugt als Pfropfgrundlage sind Celluloseacetobutyrate mit folgender Zusammensetzung:

42 bis 46 Gew.-% Buttersäure- und

18 bis 22 Gew.-% Essigsäuregruppen.

Bevorzugte Celluloseacetopropionate enthalten

50 bis 66 Gew.-% Propionsäure- und

1 bis 12 Gew.-% Essigsäuregruppen

und besonders bevorzugt

54 bis 60 Gew.–% Propionsäure- und

4 bis 9 Gew.-% Essigsäuregruppen.

Als Pfropfmonomere werden Äthylen und Vinylacetat eingesetzt. Daneben können als Comonomere Kohlenmonoxid, Acryl- und/oder Methacrylsäure sowie deren $C_1$–$C_8$-Alkylester verwendet werden.

Die Herstellung der Pfropfcopolymerisate erfolgt nach an sich bekannten Verfahren und kann sowohl kontinuierlich als auch diskontinuierlich durchgeführt werden. Dei Pfropfcopolymerisate können beispielsweise durch eine Massepolymerisation hergestellt werden, bei der der Polysaccharidester in Vinylacetat und ggf. weiteren Comonomeren gelöst wird. Bevorzugt ist jedoch eine Lösungspolymerisation, bei der zusätzlich ein aliphatischer Alkohol, vorzugsweise tert. Butanol, als Lösungsmittel eingesetzt wird. Die Polymerisation erfolgt nach Zugabe von Ethylen in einem geeigneten Reaktor unter Druck.

Als Initiatoren kommen die üblichen radikalbildenden Substanzen, z.B. organische Peroxide wie Lauroylperoxid und Di-tert.-butylperoxid, Peroxidicarbonate, wie Diisopropylperoxidicarbonat, tert.-Butylhydroperoxid und tert.-Butylperpivalat oder leicht zersetzliche Azoverbindungen, wie Azo-diiso-butyronitril in Frage. Selbstverständlich kann die Polymerisation auch durch kurzwellige Strahlungen ausgelöst werden. Die Mengen der Initiatoren liegen bevorzugt im Bereich unterhalb 1 Gew.-%, bezogen auf die Gesamtmenge an Pfropfgrundlage und -monomeren.

Der Druckbereich, bei dem polymerisiert wird, ist im wesentlichen abhängig von der Menge des eingesetzten Ethylens bzw. des angestrebten Ethylen-Anteils im Polymerisat und der angewandten Polymerisationstemperatur. Verfährt man analog den Verfahren der Hockdruckpolymerisation zur Herstellung von Pfropfcopolymeren mit niederem Vinylacetatgehalt, so polymerisiert man bei Temperaturen von 100° C–200° C vorzugsweise von 100–150° C, in einem Druckbereich zwischen 1000 und 3000 bar. Für die Herstellung ethylenarmer Produkte kann man im Druckbereich von 20–500 bar polymerisieren.

Vorzugsweise erfolgt die Herstellung der erfindungsgemässen Pfropfcopolymerisate durch Lösungspolymerisation. Als Lösungsmittel geeignet sind aliphatische $C_1$–$C_4$-Alkohole, vorzugsweise tert. Butanol, in denen die als Pfropfgrundlage dienenden Polysaccharidester und die aufzupfropfenden Monomeren gelöst werden. Die Lösungspolymerisation wird bei einem Druck von 20–500 bar und einer Temperatur von 50–150, bevorzugt von 50–100° C, durchgeführt. Sie hat den Vorteil, besonders hochmolekulare Produkte zu ergeben.

Als verfahrenstechnisch besonders günstig erwies sich die kontinuierliche Polymerisation in Masse und insbesondere in homogener Lösung. Man erhält unter diesen Bedingung besonders einheitliche Produkte. Auch die Pfropfcopolymerisation in gequollenem Zustand der Polysaccharidester kann von Interesse sein, wenn diese sich im Monomergemisch nicht auflösen wie z. B. Celluloseacetate.

In den erfindungsgemässen Produkten ist die Gesamtmenge der eingesetzten Polysaccharidester weitgehend mit den Ethylencopolymerisat-Ketten verknüpft, so dass die Pfropfcopolymerisate homogene Massen darstellen. Solche Pfropfprodukte sind u. a. in aromatischen Kohlenwasserstoffen wie z. B. Toluol oder Xylol vollständig löslich, während die Polysaccharidester selbst darin unlöslich sind.

Neben einer Herabsetzung der Oberflächenklebrigkeit bzw. der Blockneigung der Ethylen-Copolymeren bringt die Pfropfcopolymerisation auf Polysaccharidester auch eine Verbesserung der Festigkeitseigenschaften, der Transparenz, der Haftung auf Glas, Metall und Kunststoffen sowie eine verbesserte Ölbeständigkeit. Die Pfropfcopolymeren eignen sich für die Herstellung jeder Art von Formmassen z. B. für Behälter, bevorzugt jedoch zur Herstellung von Flächengebilden wie Filme, Verpackungsfolien oder Beschichtungen. Die Produkte können selbstverständlich mit Weichmachern, wie z. B. Polyester-Weichmachern, modifiziert werden. Auch die Abmischung mit anderen Polymeren, wie Polyethylen oder Copolymerisaten von Ethylen z.B. mit Vinylacetat oder Copolymerisaten von Ethylen z.B. mit Vinylacetat und Acrylsäureestern sowie mit den vorerwähnten Polysaccharidestern selbst, ergibt weitere interessante Möglichkeiten zur Variation der Produkteigenschaften.

Selbstverständlich können den Pfropfcopolymeren auch Füllstoffe, Weichmacher, Bearbeitungshilfsmittel oder Pigmente zugesetzt werden.

Die folgenden Beispiele erläutern die Erfindung.

Beispiel 1

In einem mit einer Rührvorrichtung ausgestatteten Autoklaven von 20 l Fassungsvermögen werden ein Gemisch aus 1750 g Vinylacetat und 10 500 ml tert. Butanol eingefüllt, in dem 263 g Celluloseacetobutyrat, das ca. 22 Gew.-% Essigsäure und ca. 45 Gew.-% Buttersäuregruppen enthält, und 8,4 g Asobisisobutyronitril (AIBN) gelöst sind.

Man entfernt in dem Autoklaven den Luftsauerstoff durch 2maliges Spülen mit Ethylen unter 3 bar, dann drückt man Ethylen bis zu einem Druck von 100 bar auf, erhitzt auf 63° C und erneuert den Druck mit Ethylen, sobald er um 5 bar gefallen ist. Man kühlt ab, entspannt und fällt mit Wasser das Polymerisat aus. Nach dem Trocknen erhält man 3100 g Polymerisat, das 8 Gew.-% des Celluloseesters einpolymerisiert enthält, mit einem Gehalt von 35 Gew.-% Vinylacetat im Ethylencopolymerisatanteil. Die Viskositätszahl ($\eta$) gemessen in Tetrahydrofuran beträgt 1,126, die Mooneyviskosität 32. Das Produkt ist vollständig in Toluol löslich, während das Ausgangsprodukt darin unlöslich ist. Daraus geht hervor, dass der Celluloseester weitgehend gepfropft wurde. Eine Abmischung aus 92 Gew.-% eines Ethylencopolymerisates mit 35 Gew.-% Vinylacetat und 8 Gew.–% Celluloseester stellt eine inhomogene trübe Masse dar.

Beispiel 2

In einem mit einem Rührer ausgestatteten Autoklaven mit 2,7 l Fassungsvermögen wird ein Gemisch von 250 g Vinylacetat und 1500 ml tert. Butanol eingefüllt, in dem 25 g des Celluloseesters von Beispiel 1 und 1,2 g AIBN gelöst sind. Man polymerisiert analog Beispiel 1. Nach dem Trocknen erhält man 300 g Polymerisat, das 8,3 Gew.-% des Celluloseesters enthält. Der Ethylencopolymerisatanteil enthält 36 Gew.-% einpolymerisiertes Vinylacetat. Viskositätszahl ($\eta$) 0,94, Mooneyviskosität 23.

Aus dem Produkt kann man glasklare Filme mit guter Festigkeit herstellen.

Beispiel 3

Der in Beispiel 2 beschriebene Versuch wird wiederholt mit der Abänderung, dass 150 g des Celluloseesters, 1,35 g AIBN, 3,75 g Vinylacetat und 1350 ml tert. Butanol eingesetzt werden. Man erhält 610 g eines Pfropfcopolymerisates, das 24 Gew.-% Celluloseester enthält bei einem Vinylacetatgehalt des Ethylencopolymerisatanteils von 47 Gew.-% ($\eta$) 0,97, Mooneyviskosität 40.

### Beispiel 4

Der in Beispiel 2 beschriebene Versuch wird wiederholt mit der Abänderung, dass 25g des Celluloseesters, 126g Vinylacetat, 1200ml tert. Butanol und 1,35g AIBN eingesetzt werden. Man erhält 300g eines Pfropfcopolymerisates, das 8,3 Gew.-% Celluloseester enthält bei einem Vinylacetatgehalt des Ethylencopolymerisates von 13 Gew.-%. Mooneyviskosität 26.

Aus dem Produkt kann man transparente, nicht klebende Filme hoher Festigkeit herstellen. Als Beschichtung auf Glas zeigt das Pfropfpolymerisat eine sehr starke Haftung.

### Beispiel 5

Der in Beispiel 2 beschriebene Versuch wird wiederholt mit der Abänderung, dass 37,7g des Celluloseesters, 377g Vinylacetat, 1350ml tert. Butanol und 1,35g AIBN eingesetzt werden.

Man erhält 620g eines Pfropfcopolymerisates, das 6 Gew.-% Celluloseester enthält, bei einem Vinylacetatgehalt des Ethylencopolymeren von 45 Gew.-%. ($\eta$) 1,01.

### Beispiel 6

Der in Beispiel 1 beschriebene Versuch wird wiederholt mit der Abänderung, dass als Celluloseester ein Cellulosepropionat eingesetzt wird, das ca. 57,5 Gew.-% Propionsäure – und ca. 5,5 Gew.-% Essigsäuregruppen enthält.

Man erhält 2000g eines Pfropfcopolymerisats, das 8 Gew.-% Cellulosepropionat enthält, bei einem Vinylacetatgehalt des Ethylencopolymeranteils von 32 Gew.-%. Aus dem Produkt kann man glasklare, nichtklebende Platten oder Folien herstellen, die eine grosse Flexibilität bei guten Festigkeitseigenschaften aufweisen.

### Beispiel 7

Eine Kaskade, bestehend aus 3 Rührautoklaven à 5 Liter, wurde kontinuierlich beschickt mit stündlich 542g Ethylen, 417g Vinylacetat, 741g t–Butanol, 55g des Celluloseacetobutyrats von Beispiel 1 und 0,8g AIBN. Die Temperaturen wurden dabei auf 65, 75 und 85 Grad Celsius gehalten, der Druck auf 200 bar.

Man erhielt stündlich 338g Polymer mit einer Mooneyviskosität von 8 (DIN 53 523) und einer relativen Viskosität ($\eta$) von 1,05 dl/g (0,5% in THF).

Gemäss einer gemessenen Verseifungszahl von 320mg KOH je Gramm enthielt das Polymer 16 Gew.-% Celluloseester, 37,5 Gew.-% Vinylacetat und 46,5 Gew.-% Ethylen.

## Patentansprüche

1. Pfropfpolymerisate aus
A) einem Polysaccharidester als Pfropfgrundlage und
B) einem aufgepfropften Monomerengemisch aus Vinylacetat und weiteren Monomeren, dadurch gekennzeichnet, dass die Pfropfpolymerisate aufgebaut sind aus
A) 2–30 Gew.-% Pfropfgrundlage und
B) 70–98 Gew.-% aufgepfropftem Monomerengemisch aus
1) 8–90 Gew.-% Ethylen und
2) 10–92 Gew.-% Vinylacetat
wobei sich die Summen von A und B bzw. 1 und 2 jeweils zu 100% ergänzen.

2. Pfropfcopolymerisate gemäss Anspruch 1, dadurch gekennzeichnet, dass sie aufgebaut sind aus
A) 5–25 Gew.-% Pfropfunterlage und
B) 75–95 Gew–% aufgepfropftem Monomerengemisch aus
1) 20–75 Gew.-% Ethylen und
2) 25–80 Gew.-% Vinylacetat
wobei sich die Summen von A und B bzw. 1 und 2 jeweils zu 100% ergänzen.

3. Pfropfcopolymerisate gemäss Anspruch 1 und 2, dadurch gekennzeichnet, dass als Pfropfmonomere B) ausser Ethylen und Vinylacetat als weitere Comonomere Kohlenmonoxid, Acryl- und/oder Methacrylsäure sowie deren $C_1$–$C_8$-Alkylester verwendet werden.

4. Verwendung der Pfropfcopolymerisate gemäss Anspruch 1–3 zur Herstellung von Folien.

5. Verfahren zur Herstellung eines Pfropfpolymerisats nach einem der Ansprüche 1–3, dadurch gekennzeichnet, dass man die Polysaccharidester in Vinylacetat, gegebenenfalls unter Mitverwendung weiterer Lösungsmittel oder Monomerer auflöst und unter erhöhtem Druck nach Zusatz von Ethylen mit Hilfe radikalbildender Substanzen kontinuierlich polymerisiert.

## Claims

1. Graft copolymers of
A) a polysaccharide ester as graft basis and
B) a grafted monomer mixture of vinyl acetate and other monomers,
characterised in that the graft polymers are composed of
A) 2–30% by weight of graft basis and
B) 70–98% by weight of a grafted monomer mixture of
1) 8–90% by weight of ethylene and
2) 10–92% by weight of vinyl acetate,
the sums of A and B and, respectively the sums of 1 and 2 being in each case 100%.

2. Graft copolymers according to Claim 1, characterised in that they are composed of
A) 5–25% by weight of graft basis and
B) 75–95% by weight of a grafted monomer mixture of
1) 20–75% by weight of ethylene and
2) 25–80% by weight of vinyl acetate,
the sums of A and B, respectively the sums of 1 and 2 being in each case 100%.

3. Graft copolymers according to Claim 1 and 2, characterised in that as graft monomer B), in addition to ethylene and vinyl acetate, carbon monoxide, acrylic and/or methacrylic acid and their $C_1$–$C_8$ alkyl esters are used as other comonomers.

4. Use of the graft copolymers according to Claim 1–3 for the production of foils.

5. Process for the production of a graft polymer, characterised in that the polysaccharide esters are dissolved in vinyl acetate, optionally with the addition of other solvents or monomers and are then continuously polymerised at elevated pressure with the aid of radical-forming substances after the addition of ethylene.

## Revendications

1. Copolymérisats greffés

A) d'un ester de polysaccharide comme substrat de greffage et

B) d'un mélange greffé de monomères formé d'acétate de vinyle et d'autres monomères, caractérisé en ce que les polymérisats greffés sont constitués de

A) 2 à 30% en poids de substrat de greffage et

B) 70 à 98% en poids de mélange greffé de monomères comprenant

1) 8 à 90% en poids d'éthylène et

2) 10 à 92% en poids d'acétate de vinyle

les sommes de A et B et de 1 et 2 se complétant dans chaque cas à 100%.

2. Copolymérisats greffés suivant la revendication 1, caractérisé en ce qu'ils sont constitués de

A) 5 à 25% en poids de substrat de greffage et

B) 75 à 95% en poids de mélange greffé de monomères composé de

1) 20 à 75% en poids d'éthylène et

2) 25 à 80% en poids d'acétate de vinyle, les sommes de A et B de 1 et 2 se complétant dans chaque cas à 100%.

3. Copolymérisats greffés suivant les revendications 1 et 2, caractérisé en ce qu'on utilise comme monomères greffés B) en tant qu'autres comonomères, en plus de l'éthylène et de l'acétate de vinyle, l'oxyde de carbone, l'acide acrylique et/ou l'acide méthacrylique ainsi que leurs esters d'alkyle en $C_1$ à $C_8$.

4. Utilisation des copolymérisats greffés suivant les revendications 1–3 pour la production de feuilles.

5. Procédé de production d'un polymérisat greffé suivant l'une des revendications 1 à 3, caractérisé en ce qu'on dissout les esters de polysaccharide dans de l'acétate de vinyle, eventuellement avec utilisation simultanée d'autres solvants ou d'autres monomères et on les polymérise en continu sous pression élevée après l'addition d'éthylène, à l'aide de substances libérant des radicaux.